# EUROPÄISCHE PATENTSCHRIFT

(11) **EP 0 419 788 B1**
(45) Veröffentlichungstag und Bekanntmachung des Hinweises auf die Patenterteilung: **26.05.1993**
(21) Anmeldenummer: 90113906.3
(22) Anmeldetag: 20.07.1990
(51) Int. Cl.: B60N 3/06

(54) **Verstellbare Fussstütze für eine Kraftfahrzeugbestuhlung**
Adjustable footrest for a seat arrangement of a motor vehicle
Appui-pieds réglable pour une disposition des sièges d'un véhicule à moteur

(30) Priorität: 23.09.1989 DE 3931867
(43) Veröffentlichungstag der Anmeldung: 03.04.1991
(73) Patentinhaber: MERCEDES-BENZ AG, 70327 Stuttgart (DE)
(72) Erfinder: Weinlein, Egon, D-6968 Walldürn/Altheim (DE)

(56) Entgegenhaltungen:
- DE-U- 7 528 836
- US-A- 1 389 209

## Beschreibung

Die Erfindung betrifft eine verstellbare Fußstütze für eine Kraftfahrzeugbestuhlung der im Oberbegriff des Anspruchs 1 angegebenen Gattung.

Bei einer bekannten Fußstütze dieser Art (DE-GM 75 28 836) werden Fußplatte und Schwenkhebel von einem Bügel gebildet, der über beidseitig angeordnete Ratschengesperre an dem Sitzgestell angeschlossen ist. Die Ratschengesperre ermöglichen es, in Gebrauchsstellung der Fußstütze den die Fußplatte bildenden Quersteg des Bügels unterschiedlich einzustellen, wobei der Quersteg sich allerdings auf einem Kreisbogen bewegt, so daß mit jeder Änderung der Abstandslage des Querstegs zum Sitz des Fußstützenbenutzers auch eine andere Höhe bezüglich des Fußbodens verbunden ist. Aus diesem Grund ist der Verstellbereich dieser Fußstütze nur relativ klein und bietet keinen genügenden Ausgleich für eine wechselweise Benutzung durch eine 5%-Frau und einen 95%-Mann, schon gar nicht, wenn damit Fahrzeuge, wie Omnibusse, mit von Fahrzeug zu Fahrzeug unterschiedlichem Abstandsraster der Sitzreihen ausgestattet werden sollen.

Der Erfindung liegt die Aufgabe zugrunde, eine Fußstütze der eingangs genannten Art zu schaffen, die einen solchen Verstellbereich aufweist, daß ihre Fußplatte bei unterschiedlichem Abstandsraster einer insbesonderen mehrreihigen Bestuhlung, z.B. Omnibusbestuhlung, eine den Erfordernissen der anthropometrischen Ergonomie entsprechende Lage, die eine optimale Entlastung und Entspannung für den Fußstützenbenutzer gewährleistet, sowohl für eine 5%-Frau als auch für eine 95%-Mann einnehmen kann.

Die Aufgabe ist bei einer verstellbaren Fußstütze der im Oberbegriff des Anspruchs 1 angegebenen Gattung erfindungsgemäß durch die Merkmale im kennzeichnenden Teil des Anspruchs 1 gelöst.

Bei der erfindungsgemäßen Fußstütze ist durch deren weitreichende horizontale Verschiebemöglichkeit sichergestellt, daß sowohl bei einem Abstandsraster der mehrreihigen Bestuhlung, dem sog. Sitzteiler, von 730mm (3-Sterne-Omnibus) ein 95%-Mann eine ergonomisch vorteilhafte Lage der Fußplatte vorfindet, als auch bei einem Sitzteiler von 830mm (4-Sterne-Omnibus) eine 5%-Frau die Fußstütze in einer ergonomisch günstigen Sitzhaltung erreichen kann. In der hochgeklappten Nichtgebrauchs- oder Ruheposition der Fußstütze liegt die Fußplatte an der Sitzschale an, so daß sie kein Hindernis im Fußraum für den Zugang zu den Sitzen bildet.

Vorteilhafte Ausführungsformen der erfindungsgemäßen Fußstütze mit zweckmäßigen Weiterbildungen und Ausgestaltungen der Erfindung ergeben sich aus den weiteren Ansprüchen.

Gemäß einer bevorzugten Ausführungsform der Erfindung ist mindestens eine Zugfeder vorgesehen, die einerseits am Schwenkhebel und andererseits am Gleitstück angreift und die Klinke im Eingriff mit den Zähnen der Zahnleiste am Befestigungsteil hält. Durch diese Maßnahme ist eine einfache Betätigung und Verstellung sowie ein sicherer Halt der Fußplatte in der gewünschten Verstellposition gegeben. Durch leichtes Anheben der Fußplatte und das damit verbundene Schwenken des Schwenkhebels wird die Klinke aus den Zähnen ausgehoben, wonach das Gleitstück verschoben werden kann. Wird die Fußplatte wieder freigegeben, so zieht die Zugfeder die Klinke in die gewählte Rastposition.

Werden gemäß einer weiteren Ausführungsform der Erfindung die Zähne nach Art einer Ratschenleiste (Zahnleiste) sägezahnförmig ausgebildet, wobei die rechtwinklig zum Zahngrund verlaufenden vertikalen Zahnflanken zur Fußplatte hin weisen, so wird eine Einstellung der Fußplatte in Richtung geringerer Fußabstand zum Benutzer ohne Anheben der Fußplatte ermöglicht. Die Fußplatte muß dann nur noch in Richtung auf den Benutzer hin gezogen werden, wodurch die Klinke aus der Verrastung herausgleitet und selbsttätig in die nächste Zahnlücke einfällt.

Um ein selbsttätiges Überführen der Fußstütze in die Ruheposition zu erreichen, werden gemäß einer weiteren Ausführungsform der Erfindung die Angriffspunkte der mindestens einen Zugfeder so gelegt, daß beim Überführen des Schwenkhebels in dessen Nichtgebrauchsstellung mit Durchlaufen einer Gleichgewichtslage die Zugfeder den Schwenkhebel in dessen Nichtgebrauchsstellung hochklappt.

Eine weitere Ausführungsform der Erfindung sieht am Gleitstück mindestens einen Hebelanschlag vor, an dem der Schwenkhebel in seiner Nichtgebrauchsstellung unter der Kraft der Zugfeder anliegt. Dadurch wird der Schwenkhebel in der Ruheposition der Fußstütze in einer definierten Lage gehalten.

In einer weiteren Ausführungsform der Erfindung ist zusätzlich am Befestigungsteil eine Fixiernase und am Schwenkhebel eine damit korrespondierende Vertiefung derart angeordnet, daß in der Nichtgebrauchsstellung des Schwenkhebels und in einer Verschiebewegendstellung des Gleitstücks, in welcher die Fußplatte am dichtesten zum Sitz liegt, die Fixiernase in die Vertiefung eingreift. Dadurch wird eine sichere Fixierung von Gleitstück, Schwenkhebel und Fußplatte am Befestigungsteil gegeben, so daß bei hochgeklapptem Schwenkhebel und dadurch aufgehobener Verriegelung am Befestigungsteil in der Ruheposition der Fußstütze ein Hin- und Hergleiten des Gleitstücks im Befestigungsteil im Fahrbetrieb des Fahrzeugs vermieden wird.

Gemäß einer weiteren Ausführungsform der Erfindung sind am Befestigungsteil seitlich wegstehende Befestigungslaschen mit Befestigungslöchern zur Befestigung am Querholm des Sitzes vorgesehen. Durch diese Maßnahme wird eine einfache Befestigung der Fußstütze an dem zugeordneten Sitz gewährleistet, die auch ein Nachrüsten des Fahrzeugs mit der erfindungsgemäßen Fußstütze in einfacher Weise ermöglicht.

Die Erfindung ist anhand eines in der Zeichnung dargestellten Ausführungsbeispiels im folgenden näher beschrieben. Es zeigen jeweils in schematischer Darstellung:
- Fig. 1: eine Seitenansicht einer verstellbaren Fußstütze, teilweise geschnitten,
- Fig. 2: eine Draufsicht der Fußstütze in Fig. 1,
- Fig. 3: einen Schnitt eines Schwenkhebels in der Fußstütze längs der Linie III-III in Fig. 2.

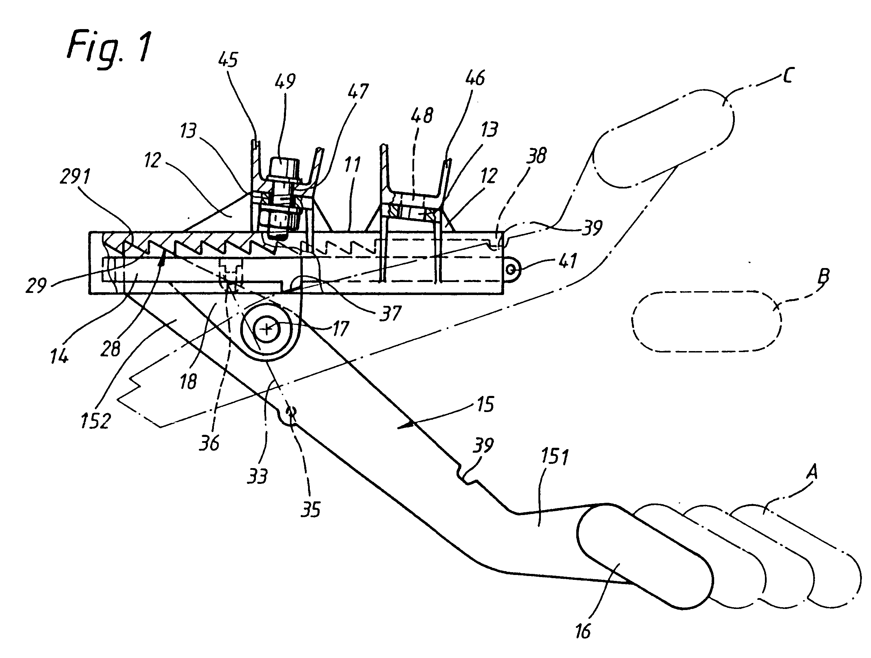

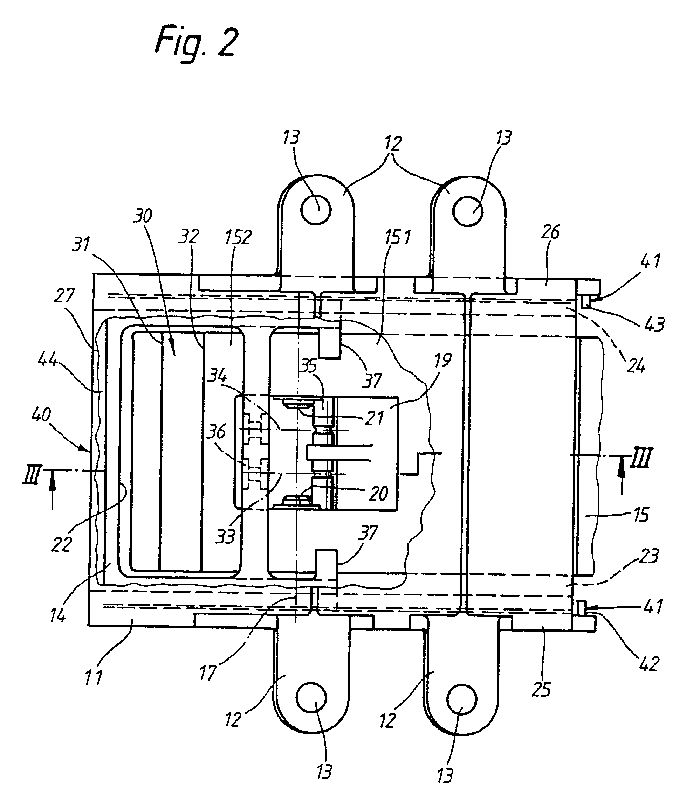

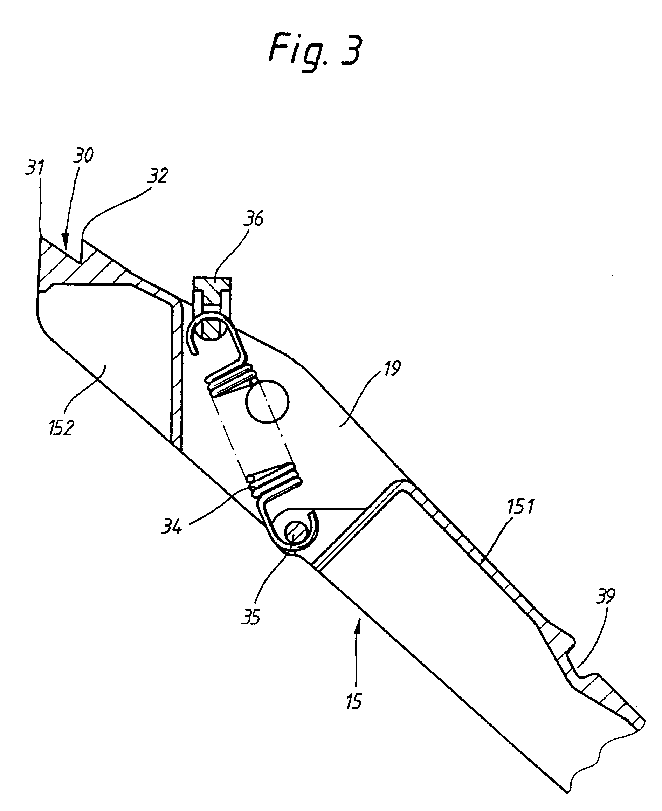

Die in Fig. 1 in Seitenansicht und in Fig. 2 in Draufsicht zu sehende Fußstütze für eine mehrreihige Omnibusbestuhlung als Beispiel für eine Kraftfahrzeugbestuhlung wird an der Unterseite eines Sitzes angebracht und ist für die Benutzung durch den Sitzbenutzer des auf den so ausgestatteten Sitz folgenden Sitzes bestimmt. Die Fußstütze besteht im wesentlichen aus drei Teilen: einem Befestigungsteil 11, das mit seitlich wegstehenden Befestigungslaschen 12 mit Befestigungslöchern 13 zur Befestigung an einem Querholm des Sitzes versehen ist, einem im Befestigungsteil 11 längsverschiebbar gehaltenen Gleitstück 14 und einem am Gleitstück 14 schwenkbar gelagerten zweiarmigen Schwenkhebel 15, der an seinem längeren Hebelarm 151 endseitig eine Fußplatte 16 trägt, die sich quer zum Schwenkhebel 15 über einen wesentlichen Teil der Breite des Sitzes erstreckt. Der Schwenkhebel 15 ist mit einer quer zur Sitzlängsachse (Fahrtrichtung) und damit quer zur Verschieberichtung des Gleitstücks 14 ausgerichteten Schwenkachse 17 am Gleitstück 14 unterhalb des Befestigungsteils 11 schwenkbar gelagert. Hierzu weist das plattenförmig ausgebildete Gleitstück 14 zwei nach unten rechtwinklig wegstehende Ohren 18 auf, von denen in Fig. 1 nur das eine zu sehen ist. Gemäß Fig. 3 weist der Schwenkhebel 15 im Bereich zwischen den Ohren 18 einen Durchbruch 19 auf und ist mit zwei Drehzapfen 20,21, die durch die seitlichen Begrenzungsstege des Durchbruchs 19 und durch die Ohren 18 hindurchgehen, schwenkbar gelagert. Im Bereich des kürzeren Hebelarms 152 des Schwenkhebels 15 weist das Gleitstück 14 eine Ausnehmung 22 auf, die so bemessen ist, daß der kürzere Hebelarm 152 mit seinem Endbereich beim Schwenken in die Gebrauchsstellung der Fußstütze durch die Ausnehmung 22 hindurchtreten kann.

Entsprechend Fig. 2 liegt das plattenförmige Gleitstück 14 im Bereich seiner beiden Längsseiten in Gleitbahnen 23,24 im Befestigungsteil 11 ein. Hierzu ist das Befestigungsteil 11 im Querschnitt etwa C-förmig ausgebildet und weist daher zwei außenliegende, im Querschnitt etwa L-förmige Schenkel 25,26 und einen die beiden Schenkel 25,26 miteinander verbindenden, im Querschnitt rechteckförmigen Steg 27 auf. Jeder Schenkel 25,26 bildet eine Gleitbahn 23,24. Der Steg 27 trägt auf seiner Unterseite über einen wesentlichen Teil seiner Längserstreckung eine Zahnleiste 28, die über die gesamte Breite des Stegs 27 reicht. Die Zähne 29 der Zahnleiste 28 sind sägezahnförmig ausgebildet, wobei die rechtwinklig zum Zahngrund verlaufenden Zahnflanken 291 auf der der Fußplatte 16 zugekehrten Zahnseite liegen. Schenkel 25,26, Steg 27 und Zahnleiste 28 des Befestigungsteils 11 sind miteinander einstückig.

Gemäß den Figuren 2 und 3 weist der kürzere Hebelarm 152 des Schwenkhebels 15 auf seiner der Zahnleiste 28 zugekehrten Oberseite im Endbereich eine Klinke 30 auf, mittels welcher der Schwenkhebel 15 in der Zahnleiste 28 verrastet werden kann. Die Klinke 30 ist dabei so ausgebildet, daß sie mit zwei sägezahnförmigen Querrippen 31,32 (Fig. 3) in zwei hintereinanderliegenden Zahnlücken zwischen aufeinanderfolgenden Zähne 29 einzugreifen vermag (Fig. 1). Die Verrastung der Klinke 30 in der Zahnleiste 28 erfolgt unter der Zugkraft zweier Zugfedern 33,34, die in dem Durchbruch 19 (Fig. 2 und 3) des Schwenkhebels 15 angeordnet sind und dort einerseits in Zapfen 35 am längeren Hebelarm 151 und andererseits in einem bis zum Durchbruch 19 nach unten reichenden Quersteg 36 am Gleitstück 14 eingehängt sind. In Fig. 1 und 2 sind die Zugfedern 33,34 durch ihre Zugrichtung kennzeichnende strichpunktierte Linien symbolisiert. Die Anordung der Zapfen 35 und des Querstegs 36 sind so getroffen, daß beim Schwenken des Schwenkhebels 15 entgegen Uhrzeigersinn dieser nach Durchlaufen einer instabilen Gleichgewichtslage durch die beiden Zugfedern 33,34 in eine obere Schwenkendstellung hineingezogen und dort gehalten wird. In Fig. 1 ist die untere Schwenkstellung des Schwenkhebels 15 ausgezogen dargestellt. In dieser mit A gekennzeichneten Schwenkstellung, welche die Gebrauchsstellung der Fußstütze repräsentiert, liegt die Fußplatte 16 frei unterhalb des Sitzes, so daß der Benutzer des nachfolgenden Sitzes seine Füße auf die Fußplatte 16 aufsetzen kann. Die Gleichgewichtslage des Schwenkhebels 15 ist mit B und nur durch die strichliniert dargestellte Lage der Fußplatte 16 gekennzeichnet. Die obere Schwenkendstellung C des Schwenkhebels 15 ist strichpunktiert dargestellt. Sie entspricht der Lage der Fußstütze in der Nichtgebrauchsstellung, in welcher die Fußplatte 16 an der Sitzschale des Sitzes anliegt und der Fußraum zwischen den Sitzreihen zur Begehung freigegeben ist.

Damit die Fußplatte 16 in der oberen Schwenkendstellung C des Schwenkhebels 15 immer in einer definierten Lage liegt, sind einerseits am Gleitstück 14 Hebelanschläge 37 (Fig. 1 + 2) vorgesehen, an denen der Schwenkhebel 15 unter der Kraft der Zugfedern 33,34 anliegt, und andererseits am Befestigungsteil 11 eine Fixiernase 38 und am Schwenkhebel 15 eine mit der Fixiernase 38 korrespondierende Vertiefung 39 angeordnet (Fig. 1 + 3). In der oberen Schwenkendstellung C des Schwenkhebels 15 liegt dieser nunmehr an dem Hebelanschlag 37 an und kann zusammen mit dem Gleitstück 14 im Befestigungsteil 11 soweit verschoben werden, bis die Fixiernase 38 in die Vertiefung 39 einrastet. In dieser Stellung liegt das Gleitstück 14 an einem in Fahrtrichtung vorderen Anschlag am Befestigungsteil 11 und die Fußplatte 16 annähernd an der Sitzschale des Sitzes an. Eine Verschiebebewegung des Gleitstücks 14 in dem Befestigungsteil 11 ist damit blockiert. Erst mit Schwenken des Schwenkhebels 15 nach unten wird diese Blockierung wieder aufgehoben. Damit das Gleitstück 14 nicht an der in Fahrtrichtung hinteren, zum Einschieben des Gleitstücks 14 offenen Seite des Befestigungsteils 11 aus diesem herausgleiten kann, sind dort hintere Anschläge 41 vorgesehen, an denen das Gleitstück 14 am Ende seines Verschiebeweges anstößt. Diese hinteren Anschläge 41 werden von zwei Spannstiften 42,43 (Fig. 2) gebildet, wobei jeweils ein Spannstift 42 bzw. 43 in einem Schenkel 25 bzw. 26 des Befestigungsteils 11 eingelassen ist und von diesem auf der dem Gleitstück 14 zugekehrten Innenseite vorsteht. Ein vorderer Anschlag 40 am anderen Ende des Verschiebewegs des Gleitstücks 14 ist von einer Querschiene 44 gebildet, die am Ende des Befestigungsteils 11 die Schenkel 25,26 miteinander verbindet und einstückig mit dem Steg 27 ist.

Die Befestigung der Fußstütze am unteren Querholm des Sitzes ist in Fig. 1 angedeudet, wobei Querholmstege 45,46 des Sitzes abschnittweise und im Querschnitt zu sehen sind. Die Befestigungslaschen 12 sind so ausgebildet, daß ihre Auflageflächen mit denen der Querholmstege 45,46 korrespondieren. Die Befestigung erfolgt durch Schraubenverbindungen 49, die durch entsprechende Bohrungen 47,48 in den Querholmstegen 45,46 und durch die Befestigungslöcher 13 in den Befestigungslaschen 12 hindurchtreten.

Die möglichen Verstellpositionen der Fußplatte 16 in der Gebrauchsstellung der Fußstütze (Schwenkendbereich A des Schwenkhebels) ist in Fig. 1 durch Strichpunktierung angedeutet. Jede Lage der Fußplatte 16 entspricht einer Einrastung des Schwenkhebels 15 mit seiner Klinke 30 in aufeinanderfolgenden Zahnlücken zwischen den Zähnen 29 der Zahnleiste 28 im Befestigungsteil 11. Zur Verstellung der Fußplatte 16 ist diese etwas anzuheben, wodurch der Schwenkhebel 15 geringfügig im Uhrzeigersinn schwenkt und die Klinke 30 außer Eingriff mit der Zahnleiste 28 kommt. Nunmehr kann durch Aufbringen einer mit den Füßen erzeugten horizontalen Zug- oder Schiebekraft an der Fußplatte 16 das Gleitstück 14 soweit im Befestigungsteil 11 verschoben werden, bis die Fußplatte 16 die gewünschte Stellung einnimmt. Wird die Fußplatte 16 wieder losgelassen, so ziehen die Zugfedern 33,34 die Klinke 30 wieder in die Zahnleiste 28 und die Fußplatte 16 ist in der gewünschten Stellung verriegelt. Dadurch, daß die vertikalen Zahnflanken 291 der Zähne 29 in der Zahnleiste 28 auf der der Fußplatte 16 zugekehrten Zahnseite liegen, führt der Druck, der beim Aufsetzen der Füße auf die Fußplatte 16 auf den Schwenkhebel 15 ausgeübt wird, zu einer Vergrößerung der Verriegelungskraft der Klinke 30 in der Zahnleiste 28.

## Patentansprüche

1. Verstellbare Fußstütze für eine Kraftfahrzeugbestuhlung, die für die Anordnung im rückwärtigen unteren Bereich eines Sitzes zur Benutzung durch den Sitzbenutzer des nachfolgenden Sitzes bestimmt ist, mit einer Fußplatte (16) und einem die Fußplatte (16) endseitig tragenden Schwenkhebel (15), der um eine am Sitz angeordnete, quer zur Sitzlängsachse ausgerichtete Schwenkachse (17) von einer Nichtgebrauchsstellung (C), in welcher die Fußplatte (16) in einer oberen Position in etwa am Sitz anliegt, in eine Gebrauchsstellung (A), in welcher die Fußplatte (16) in einer tiefer liegenden Position unterhalb des Sitzes von diesem nach rückwärts wegsteht, schwenkbar ist und umgekehrt,
**dadurch gekennzeichnet,** daß der Schwenkhebel (15) zweiarmig ausgebildet ist und die Schwenkachse (17) an einem Gleitstück (14) gelagert ist, welches in Sitzlängsrichtung verschiebbar in einem zur Befestigung an dem Sitz ausgebildeten Befestigungsteil (11) geführt ist, und daß am Befestigungsteil (11) mindestens eine in Sitzlängsrichtung verlaufende Zahnleiste (28) mit nach unten weisenden Zähnen (29) angeordnet ist, in welche in der Gebrauchsstellung (A) des Schwenkhebels (15) eine Klinke (30) einrastet, welche der Schwenkhebel (15) an einer das Zahnleiste (28) zugekehrten Oberseite seines der Fußplatte (16) abgekehrten Endes am kürzeren Hebelarm (152) aufweist.

2. Fußstütze nach Anspruch 1, dadurch gekennzeichnet, daß die Zähne (29) der Zahnleiste (28) sägezahnförmig ausgebildet sind, wobei die rechtwinklig zum Zahngrund verlaufenden Zahnflanken (291) auf der der Fußplatte (16) zugekehrten Zahnseite liegen.

3. Fußstütze nach Anspruch 2, dadurch gekennzeichnet, daß die Klinke (30) so ausgebildet ist, daß sie mit sägezahnförmigen Querrippen (31,32) in zwei hintereinander liegenden Zahnlücken zwischen den Zähnen (29) der Zahnleiste (28) einzugreifen vermag.

4. Fußstütze nach einem der Ansprüche 1 - 3, dadurch gekennzeichnet, daß am Schwenkhebel (15) einerseits und am Gleitstück (14) andererseits mindestens eine Zugfeder (33,34) angreift, welche die Klinke (30) in Eingriff mit den Zähnen (29) der Zahnleiste (28) hält.

5. Fußstütze nach Anspruch 4, dadurch gekennzeichnet, daß die Angriffspunkte der mindestens einen Zugfeder (33,34) so gelegt sind, daß beim Überführen des Schwenkhebels (15) in dessen Nichtgebrauchsstellung (C) mit Durchlaufen einer instabilen Gleichgewichtslage (B) die Zugfeder (33,34) den Schwenkhebel (15) in dessen Nichtgebrauchsstellung (C) hochklappt.

6. Fußstütze nach Anspruch 5, dadurch gekennzeichnet, daß am Gleitstück (14) mindestens ein Hebelanschlag (37) vorgesehen ist, an dem der Schwenkhebel (15) in seiner Nichtgebrauchsstellung (C) unter der Kraft der Zugfeder (33,34) anliegt.

7. Fußstütze nach einem der Ansprüche 1 - 6, dadurch gekennzeichnet, daß am Befestigungsteil (11) eine Fixiernase (38) und am Schwenkhebel (15) eine damit korrespondierende Vertiefung (39) derart angeordnet sind, daß in der Nichtgebrauchsstellung (C) des Schwenkhebels (15) und in der einen Verschiebewegendstellung des Gleitstücks (14), in welcher die Fußplatte (15) am nächsten zum Sitz liegt, die Fixiernase (38) in die Vertiefung (39) eingreift.

8. Fußstütze nach einem der Ansprüche 1 - 7, dadurch gekennzeichnet, daß das Befestigungsteil (11) im Querschnitt etwa C-förmig mit im Querschnitt etwa L-förmigen, durch einen Steg (27) verbundenen Schenkeln (25,26) ausgebildet ist, daß jeder Schenkel (25,26) eine Gleitbahn (23,24) für das Gleitstück (14) bildet und der Steg (27) auf seiner den Schenkeln (25,26) zugekehrten Unterseite die Zahnleiste (28) trägt.

9. Fußstütze nach Anspruch 8, dadurch gekennzeichnet, daß am Befestigungsteil (11) in die Gleitbahnen (23,24) hineinragende Anschläge (40,41) zur Begrenzung des Verschiebewegs des Gleitstücks (14) angeordnet sind.

10. Fußstütze nach Anspruch 9, dadurch gekennzeichnet, daß der eine Anschlag (40) von einer an einem Ende des Befestigungsteils (11) angeordneten, Schenkel (25,26) und Steg (27), vorzugsweise einstückig, miteinander verbindenden Querschiene (44) und der andere Anschlag (41) von mindestens einem Spannstift (42,43) gebildet ist, der am für das Einschieben des Gleitstücks (14) in die Gleitbahnen (23,24) offenen Ende des Befestigungsteils (11) in einem Schenkel (25,26), von diesem abstehend, befestigt ist.

11. Fußstütze nach einem der Ansprüche 8 - 10, dadurch gekennzeichnet, daß das Gleitstück (14) von einer im Seitenbereich in den Gleitbahnen (23,24) einliegenden Platte mit zwei im Querabstand voneinander nach unten rechtwinklig wegstehenden Ohren (18) gebildet ist, an denen der Schwenkhebel (15) gelagert ist, und daß die Platte eine großflächige Ausnehmung (22) zum Durchtritt des die Klinke (30) tragenden Hebelendes des Schwenkhebels (15) aufweist.

12. Fußstütze nach einem der Ansprüche 1 - 11, dadurch gekennzeichnet, daß am Befestigungsteil (11) seitlich wegstehende Befestigungslaschen (12) mit Befestigungslöchern (13) zur Befestigung am Querholm (45,46) des Sitzes angeordnet sind.

## Claims

1. Adjustable foot support for vehicle seating, to be disposed in the rear lower area of a seat, for use by the occupier of the said seat in accordance with the following design, with a foot rest (16) and a pivoted lever (15) which carries the foot rest (16) at its end, said pivoted lever being turned about and able to turn about a swivel-axis of a position when not in use (C), in which the foot rest (16) lies in an upper position near to the seat, which is disposed across the longitudinal axis of the seat, and which in a position when in use (A), in which the foot rest (16) lies in a deeper position under the seat, can be pushed backwards, wherein the pivoted lever (15) is formed with two arms and the swivel-axis (17) is mounted on a sliding element (14), which is adjustably disposed in the longitudinal direction of the seat in an attachment element (11) formed for attachment to the seat and having at least a toothed gib (28) running in the longitudinal direction of the seat and having downwardly directed teeth (29), in which a catch (30) engages when in the position in use (A) of the pivoted lever (15), said pivoted lever (15) having said catch (30) on one of the upper sides which are turned towards the toothed gib (28) at its end which is turned away from the foot rest (16) on the shorter lever arm (152).

2. Foot-support in accordance with claim 1, wherein the teeth (29) of the toothed gib (28) are formed such that they are saw-tooth shaped, whereby the sides (291) of the teeth running a right-angles to the base of the teeth lie on the side of the teeth facing the foot rest (16).

3. Foot-support in accordance with claim 2, wherein the catch (30) is formed such that it can engage with saw-tooth shaped cross-ribs (31, 32) in two teeth spaces lying one behind the other between the teeth (29) of the toothed gib (28).

4. Foot-support in accordance with any of claims 1 to 3, wherein at least a tension spring (33, 34) takes hold of the pivoting lever (15) on one side and takes hold of the sliding element (14), said tension spring (33, 34) holding the catch (30) in contact with the teeth (29) of the toothed gib (28).

5. Foot-support in accordance with claim 4, wherein the points of application of the at least one tension spring (33, 34) are positioned such that when the pivoted lever (15) passes from its position when not in use (C) through an unstable position of equilibrium (B) the tension spring (33, 34) lifts the pivoted lever (15) up into its position when not in use (C).

6. Foot-support in accordance with claim 5, wherein the sliding element (14) is pivoted with at least a lever stop (37), on which the pivoted lever (15) lies in its position when not in use (C) under the force of the tension spring (33, 34).

7. Foot-support in accordance with any of claims 1 to 6, wherein a location dog (38) and a corresponding recess (39) on the pivoted lever (15) are disposed on the attachment lever (11) such that when the pivoted lever (15) is in its position when not in use (C) and in one of the positions when adjusted of the sliding element (14), in which the foot rest (16) lies next to the seat, the location dog (38) engages in the recess (39).

8. Foot-support in accordance with any of claims 1 to 7, wherein the attachment element (11) is developed such that it is approximately C-shaped in cross-section with approximately L-shaped shaped shanks (25, 26) connected to said attachment element (11) by means of a web (27), and each shank (25, 26) forms a guideway (23, 24) for the sliding element (14) and the web (27) carries the toothed gib (28) on its underside which faces the shanks (25, 26).

9. Foot-support in accordance with claim 8, wherein inwardly projecting stops (40, 41) for limiting the adjusting movement of the sliding element (14) are disposed in the guideways (23, 24) on the attachment element (11).

10. Foot-support in accordance with claim 9, wherein one stop (40) is formed by a shank (23, 24) and web (27), mainly single-element interconnecting crossbars (44) arranged on an end of the attachment element (11) and the other stop (41) is formed from at least one strain pin (42, 43), which is fixed in a shank (25, 26), projecting from the said shank, into the guideway (23, 24) open end of the attachment element (11).

11. Foot-support in accordance with any of claims 8 to 10, wherein the sliding element (14) is formed from a plate lying in the guideway (23, 24) and having two projecting ears (18) standing abreast of each other and pointing downwards at right-angles, on which the pivoted lever is (15) mounted, and the said plate has a wide clearance (22) for the passage of the lever end of the pivoted lever (15) which carries the catch (30).

12. Foot-support in accordance with any of claims 1 to 11, wherein mounting collars (12) with mounting holes (13) for attachment to the crosspiece (45, 46) of the seat project from the side of the attachment element (11).

## Revendications

1. Repose-pieds réglable pour un ensemble de sièges d'un véhicule automobile, qui est destiné à être monté dans la zone inférieure arrière d'un siège en vue de son utilisation par l'occupant du siège suivant, comportant une plaque (16) pour les pieds et un levier pivotant (15) portant à une extrémité la plaque (16), lequel levier peut pivoter, autour d'un axe de pivotement (17) placé sur le siège, orienté perpendiculairement à l'axe longitudinal du siège, d'une position de non-utilisation (C), dans laquelle la plaque (16) s'applique à peu près contre le siège, en position haute, dans une position d'utilisation (A), dans laquelle la plaque (16), en position plus basse au-dessous du siège, fait saillie de celui-ci vers l'arrière, et inversement, caractérisé en ce que le levier de pivotement (15) comporte deux bras et l'axe de pivotement (17) est monté sur un coulisseau (14) qui peut coulisser dans la direction longitudinale du siège et est guidé dans une pièce de fixation (11) conçue en vue de la fixation sur le siège, et en ce qu'il est prévu sur la pièce de fixation (11) au moins une crémaillère (28), s'étendant dans la direction longitudinale du siège, présentant des dents (29) dirigées vers le bas, dans laquelle, en position d'utilisation (A) du levier de pivotement (15), s'accroche un cliquet (30) que comporte le levier de pivotement (15), sur une face supérieure, tournée vers la crémaillère (28), de son extrémité (152) opposée à la plaque (16)

2. Repose-pieds selon la revendication 1, caractérisé en ce que les dents (29) de la crémaillère (28) sont en forme de dents de scie, les flancs (291), perpendiculaires au fond des dents se trouvant sur le côté des dents tournées vers la plaque (16).

3. Repose-pieds selon la revendication 2, caractérisé en ce que le cliquet (30) est tel qu'il peut s'engager avec des nervures transversales (31, 32) en forme de dents de scie, dans deux entre-dents, situés l'un derrière l'autre, entre les dents (29) de la crémaillère (28).

4. Repose-pieds selon l'une des revendications 1 à 3, caractérisé en ce que sur le levier pivotant (15) d'une part et sur le coulisseau (14) d'autre part agit au moins un ressort de traction (33, 34) qui maintient le cliquet (30) en prise avec les dents (29) de la crémaillère (28).

5. Repose-pieds selon la revendication 4, caractérisé en ce que les points d'action d'un ressort de traction (33, 34) au moins sont situés de manière que lorsque le levier pivotant (15) passe dans sa position de non-utilisation (C), en passant par une position d'équilibre instable (B), le ressort de traction (33, 34) relève le levier pivotant (15) dans sa position de non-utilisation (C).

6. Repose-pieds selon la revendication 5, caractérisé en ce qu'il est prévu sur le coulisseau (14) au moins une butée de levier (37) contre laquelle s'applique le levier pivotant (15), dans sa position de non-utilisation (C), sous l'effet du ressort de traction (33, 34).

7. Repose-pieds selon l'une des revendications 1 à 6, caractérisé en ce que sur la partie de fixation (11) il est prévu un ergot de fixation (38) et sur le levier pivotant (15) un creux (39) correspondant à cet ergot, de manière qu'en position de non-utilisation (C) du levier pivotant (15) et dans une position de fin de course du coulisseau (14), dans la quelle la plaque (16) se trouve le plus près du siège, l'ergot de fixation (38) s'engage dans le creux (39).

8. Repose-pieds selon l'une des revendications 1 à 7, caractérisé en ce que la partie de fixation a une section transversale à peu près en C avec des branches (25, 26), de section transversale à peu près en L, reliées par une traverse (27), en ce que chaque branche (25, 26) forme une voie de glissement (23, 24) pour le coulisseau (14) et la traverse (27) porte la crémaillère (28), sur sa face inférieure tournée vers les branches (25, 26).

9. Repose-pieds selon la revendication 8, caractérisé en ce que des butées (40, 41), s'engageant dans les voies de glissement (23, 24), sont prévues sur la pièce de fixation (11), pour limiter le parcours de coulissement du coulisseau (14).

10. Repose-pieds selon la revendication 9, caractérisé en ce qu'une butée (40) est formée par un rail transversal (44), monté à une extrémité de la pièce de fixation (11), reliant entre elles, de préférence d'une seule pièce, les branches (25, 26) et la traverse (27) et l'autre butée (41) est formée par au moins un goujon de serrage (42, 43) qui est fixé à l'extrémité de la pièce de fixation (11), ouverte pour introduire le coulisseau (14) dans les voies de glissement (23, 24), dans une branche (25, 26), en faisant saillie par rapport à celle-ci.

11. Repose-pieds selon l'une des revendications 8 à 10, caractérisé en ce que le coulisseau (14) est formé par une plaque introduite, dans la zone des côtés, dans les voies de glissement (23, 24), avec deux oreilles (18), espacées transversalement l'une de l'autre, faisant saillie à angle droit vers le bas, sur lesquelles est monté le levier pivotant (15) et en ce que la plaque présente un évidement (22) de grande surface, pour le passage de l'extrémité, portant le cliquet (30), du levier pivotant (15).

12. Repose-pieds selon l'une des revendications 1 à 11, caractérisé en ce qu'il est prévu sur la pièce de fixation (11), des pattes de fixation (12), faisant saillie latéralement, avec des trous de fixation (13) pour la fixation sur la traverse (45, 46) du siège.
